## Europäisches Patentamt
## European Patent Office
## Office européen des brevets

(11) Veröffentlichungsnummer: **0 095 025**

**A1**

(12) # EUROPÄISCHE PATENTANMELDUNG

(21) Anmeldenummer: 83102663.8

(22) Anmeldetag: 17.03.83

(51) Int. Cl.³: **G 01 C 7/04**
**G 01 B 11/02, B 43 L 13/20**

(30) Priorität: 18.03.82 DE 8207685 U

(43) Veröffentlichungstag der Anmeldung:
30.11.83 Patentblatt 83/48

(84) Benannte Vertragsstaaten:
AT BE CH FR GB IT LI LU NL SE

(71) Anmelder: Hammer, Reinhold
Heddernheimer Landstrasse 233
D-6000 Frankfurt(DE)

(71) Anmelder: Wohlleben, Hans-Jürgen
Strackgasse 17
D-6370 Oberursel(DE)

(72) Erfinder: Hammer, Reinhold
Heddernheimer Landstrasse 233
D-6000 Frankfurt(DE)

(72) Erfinder: Wohlleben, Hans-Jürgen
Strackgasse 17
D-6370 Oberursel(DE)

(74) Vertreter: KUHNEN & WACKER Patentanwaltsbüro
Schneggstrasse 3-5 Postfach 1729
D-8050 Freising(DE)

(54) Verfahren zum Ermitteln einer Hüllkurve und Schablone dafür.

(57) Mit der Anmeldung wird ein Verfahren zum Ermitteln einer Hüllkurve (17) einer Projektionsfläche, die von einem lenkbaren Fahrzeug (20) beim Durchfahren einer Kurve überstrichen wird, dergestalt vorgeschlagen, daß die Außenbegrenzung (21) des Fahrzeugs an einer bestimmten vorgegebenen Kurvenlinie (12) geführt wird und die zur Kurveninnenseite weisende Schleppkurve (19) der Hüllkurve (17) meßtechnisch erfaßt wird. Dazu werden auf der zur Innenseite der Kurve weisenden Seite (22) des Fahrzeugs (20) Reflektoren (23, 24) angebracht, deren Stellung entlang des Fahrtweges in bestimmten Abständen registriert wird. Die erhaltenen Meßdaten werden maßstabsgetreu aufgezeichnet und entsprechend der Stellung der Reflektoren (23, 24) die Außenabmessungen des Fahrzeugs (20) maßstabsgerecht dazugezeichnet. Es ergeben sich somit nacheinanderfolgende Abbildungen des Fahrzeugs entsprechend seiner Stellung beim Durchfahren der vorbestimmten Kurve (12). Die Schleppkurve (19) läßt sich durch einfaches Anlegen einer Hüllkurve an die sich überschneidenden, zur Kurveninnenseite weisenden Abbildungen der Fahrzeugaußenabmessungen zeichnen. Weiterer Gegenstand der Anmeldung ist eine Schablone (26), die mit Hilfe des beschriebenen Verfahrens herstellbar ist und die bei der Planung von Verkehrsanlagen zur Ermittlung des Flächenbedarfs für Kurvenfahrten bestimmter Fahrzeuge verwendbar ist.

./...

EP 0 095 025 A1

FIG. 2

FIG. 3

Reinhold Hammer
Heddernheimer Landstr. 233

6000 Frankfurt

und

H.J. Wohlleben
Strackgasse 17

6370 Oberursel

Verfahren zum Ermitteln einer Hüllkurve einer Projektionsfläche, die von einem Fahrzeug beim Durchfahren einer Kurve überstrichen wird und Schablone für eine Hüllkurve

Die Erfindung betrifft ein Verfahren zum Ermitteln einer Hüllkurve einer Projektionsfläche nach dem Oberbegriff des Anspruchs 1 und eine Schablone, die im verkleinerten Maßstab wenigstens eine Hüllkurve einer Projektionsfläche wiedergibt nach dem Oberbegriff des Anspruchs 9.

Bei der Geradausfahrt eines lenkbaren Fahrzeugs wird von diesem eine Fläche überstrichen, bzw. ein seitlicher Platzbedarf benötigt, der der Breite des Fahrzeugs entspricht. Bei Kurvenfahrten wird dieser Platzbedarf je nach Fahrzeugkonstruktion und Kurvenweite zum Teil erheblich größer. Die überstrichene Fläche verbreitert sich beim Einbiegen in die Kurve allmählich (Einfahrtstrompete) bis zu einer bei einer Kreisfahrt konstanten Breite und verengt sich bei der Ausfahrt aus der Kurve wieder (Ausfahrtstrompete) bis zu der der Fahrzeugbreite entsprechenden Breite bei Geradausfahrt.

§ 32 der Straßenverkehrszulassungsordnung gibt maximale Werte für den Platzbedarf an, den Fahrzeuge bei Kurvenfahrten nicht überschreiten dürfen, wobei jedoch Sondergenehmigungen für Spezialfahrzeuge erteilt werden können. Dieser § 32 besagt in Absatz 2: Kraftfahrzeuge und Züge müssen so gebaut und eingerichtet sein, daß die bei einer Kreisfahrt von 360° überstrichene Ringfläche mit einem äußeren Radius von 12 m keine größere Breite als 6,70 m hat. Dabei muß die vordere - bei hinterradgelenkten Fahrzeugen die hintere - äußerste Begrenzung des Fahrzeugs auf einem Kreis von 12 m Radius geführt werden. Beim Einfahren aus einer den Kreis tangierenden Geraden darf kein Teil des Kraftfahrzeugs oder Zuges diese Gerade um mehr als 0,8 m nach außen überschneiden (Heckausschlag). Ergänzend ist hierzu vorgeschrieben: Bei einer Fahrt durch einen Viertelkreis muß der zulässige Heckausschlag abgebaut und auf den 12-m-Radius zurückgeführt sein.

§ 32 der Straßenverkehrszulassungsordnung gibt damit nur Maximalwerte an; eine Auskunft über den Platzbedarf von konkret eingesetzten Fahrzeugen kann daraus nicht abgeleitet werden. Je nach Aufbau der Fahrzeuge können die vorgegebenen Grenzwerte ausgenützt oder erheblich unterschritten werden.    Auf Messungen beruhende, genaue Werte über die von bestimmten Fahrzeugtypen, insbesondere Bussen, bei Kurvenfahrten überstrichenen Flächen sind von den Fahrzeugherstellern nicht zu erhalten.

Bei der Planung von Verkehrsanlagen wie Wendeschleifen, Haltestellen, Feuerwehreinfahrten, Kreuzungen, Kurvenradien usw., die mit größeren Fahrzeugen befahrbar sein sollen, kann daher nicht mit ausreichender Sicherheit vorhergesagt werden, ob diese Einrichtungen auch von den zugelassenen Fahrzeugen befahren werden können. Das kann dazu führen, daß bei Verkehrsanlagen mit Linienbusverkehr Busfahrer bei der Ausübung ihres Berufes ständig gezwungen sind, Randsteine, Sperrflächen und durchgezogene weiße Markierungen zu überfahren.

Ergänzend zu § 32 der Straßenverkehrszulassungsordnung wurden Richtlinien für die Anlage von Straßen (RAS) festgelegt, die bei der Planung und dem Bau von Fahrbahnen, Fahrbahnrändern und Leiteinrichtungen zu beachten sind. Diese Richtlinien gestatten es, in gewissen Grenzen Fahrbahnen und deren Begrenzungen zu planen. Sie geben jedoch keine zuverlässige Auskunft darüber, ob die so gebauten Fahrbahnen für den Platzbedarf zugelassener Fahrzeuge ausreichen. Die hier gegebenen Planungshilfen sind beispielsweise Hüllkurven, die aus den Beiblättern zum Normblatt der Schweizerischen Normenvereinigung SNV 40 267 abgeleitet sind und die auf nicht mehr gültigen geringeren Werten aus § 32 der Straßenverkehrszulassungsordnung basieren.

In den RAS wird beispielsweise für Wohngebiete nur die Anwendung von drei Radien für den Innenbogen von Kurven von 6,8 und 10 m beschrieben mit den zugehörigen Einmündungswinkeln von 75 gon, 100 gon und 125 gon. Bei der Verwendung des hier aufgezeigten Verfahrens zur Festlegung der Fahrbahnbreiten ist bereits im Entwurfsstadium für Knotenpunkte, die häufiger von Lkw befahren werden, eine umfangreiche Berechnung notwendig, die jedoch trotzdem zu keinem zuverlässigen Ergebnis führt, da der Außenbogen der Kurve unbestimmt bleibt und die Fahrbahnbreiten variabel sind.

In den in diesen Richtlinien genannten Regelwerten bleibt das unterschiedliche Fahrverhalten von zweiachsigen Bussen gegenüber Gelenkbussen mit drei Achsen unberücksichtigt. Auch das unterschiedliche Fahrverhalten bei Gelenkbussen mit starrer Hinterachse oder gelenkter Hinterachse wird in diesen Regelwerten nicht ausreichend berücksichtigt.

Die fehlende Möglichkeit aufgrund der vorgenannten Bestimmungen und Richtlinien, den Flächenbedarf bestimmter Fahrzeuge bei Kurvenfahrten abzuleiten, veranlaßte die Verkehrsbetriebe Zürich zu einer umfangreichen Untersuchung mit ihren eingesetzten Bussen. Das dabei durchgeführte Verfahren ist in der Zeitschrift "Verkehr und Technik", 1981, Heft 2, Seite 44 ff. dargestellt. Bei diesem Verfahren wurde eine Spurmarkierung durch einen dünnen Wasserstrahl auf einer Betonfahrbahn verwendet. Dazu wurden auf dem Dach eines 18 m langen Gelenkbusses mit zwangsgelenkter Nachläuferachse vier Wassertanks mit einem Fassungsvermögen von je ca. 30 ltr. montiert. Von diesen Behältern wurde das Wasser über Absperrhähne an Karosseriepunkte (insgesamt vier Punkte, je zwei an jeder Fahrzeugseite) an ca. 10 cm über der Fahrbahn befestigte Markierungsdüsen geleitet. Beim Durchfahren einer Kurve wurden die Absperrhähne geöffnet und eine Spurmarkierung durch die austretenden Wasserstrahlen auf einer trockenen Betonfahrbahn erzielt, die von einer Weitwinkelkamera von einem erhöhten Stativ aus registriert wurde. Die Kurvenfahrten erfolgten hier frei, d. h. ohne vorgegebene Fahrbahnbegrenzung oder Fahrzeugführung. Lediglich die Ankunftsrichtung wurde durch eine Reihe von Kunststoffkegeln markiert, so daß sich der Fahrer seine "Ideallinie" suchen mußte. Die rechnerische Entzerrung der aufgenommenen Bilder wurde auf einer Groß-EDV-Anlage durchgeführt.

Diese bekannte Untersuchung hat zu Hüllkurven geführt, die insbesondere bei der Verwendung zu Planungen oder Oberprüfungen in beengten städtischen Verhältnissen kaum verwendbar sind. Die beschriebene Anordnung führt beispielsweise schon dadurch zu Ungenauigkeiten, daß bei engen gefahrenen Kurvenradien nicht der größte Innenausschlag der Hüllkurve mit der Wassertropfenmethode markiert wird. Der größte Innenausschlag wird nicht von einem Punkt der Karosserie an der entsprechenden Kurveninnenseite geliefert (an den dann in etwa eine Wasserstrahl-Markierungsdüse angebracht werden könnte), sondern dieser Punkt bewegt sich entlang der Karosserie. Beispielsweise bewegt sich dieser Punkt des größten Innenausschlags bei einem Bus mit gelenkter Hinterachse auf der Fahrzeugkarosserie zwischen dem Drehgestell und der letzten Achse.

Eine weitere Unsicherheit für die Genauigkeit liegt darin, daß der jeweilige Fahrer seine "Ideallinie" selbst suchen konnte.

Die durchgeführte photogrammetrische Erfassung der Hüllkurven ist sehr aufwendig und zeitraubend.

Die Bemühungen, die gefahrenen Hüllkurven im Anschluß an die Versuche mathematisch zu erfassen, sind bei Planungen von Verkehrsanlagen wenig nützlich, da dann bereits im Entwurfsstadium erhebliche Berechnungen erforderlich sind, was nicht effektiv ist und in der Regel umgangen wird. Aus den zur Verfügung gestellten Kurven ist zudem nicht erkennbar, für welchen Bustyp sie gelten.

Aufgabe der Erfindung ist es demgegenüber, ein Verfahren zu schaffen, mit dem Hüllkurven bei Kurvenfahrten genau erfaßbar sind und erhaltene Vermessungsergebnisse einfach verarbeitet werden können. Eine weitere Aufgabe der Erfindung besteht darin, eine Schablone, auf der Hüllkurven wiedergegeben werden, als Hilfsmittel bei der Planung eines ausreichenden Flächenbedarfs zwischen Bordsteinen bzw. Fahrbahnmarkierungen zur Verfügung zu stellen.

Diese Aufgabe wird mit den kennzeichnenden Merkmalen des Anspruchs 1 gelöst.

Mit Hilfe des Verfahrens gemäß Anspruch 1 kann die tatsächliche Projektionsfläche bzw. deren Hüllkurve, wie sie von einem lenkbaren Fahrzeug beim Durchfahren einer Kurve überstrichen wird, meßtechnisch einwandfrei genau erfaßt werden, die erhaltenen Meßdaten auf einfache Weise gespeichert und verarbeitet werden und für jedes beliebige Fahrzeug, insbesondere für Busse, für jede gefahrene Kurve

eine Hüllkurve zeichnerisch dargestellt werden. Weiter ist es dann möglich, eine Schablone gemäß Anspruch 9 in jedem beliebigen Maßstab herzustellen.

Die Unteransprüche haben vorteilhafte Weiterbildungen der Erfindung zum Inhalt.

Weitere Einzelheiten, Merkmale und Vorteile der Erfindung ergeben sich aus der nachfolgenden Beschreibung anhand der Zeichnung.

Es zeigen

Fig. 1   eine Meßlinieneinteilung,

Fig. 2   eine Prinzipzeichnung zur Gewinnung einer Hüll-
         kurve,

Fig. 3   eine Hüllkurve bzw. eine Schablone für ein bestimmtes Fahrzeug bei einem bestimmten Kurvenradius,

Fig. 4   eine Reihe von Hüllkurven für ein bestimmtes
         Fahrzeug bei unterschiedlichen Kurvenradien.

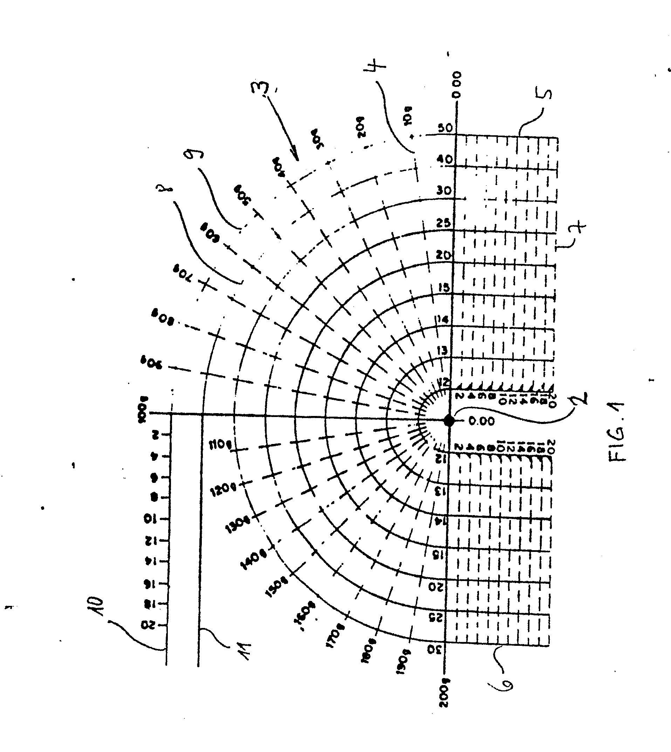

In Fig. 1 ist ein Meßliniennetz 1 dargestellt, das von einem Mittelpunkt 2 ausgehend Halbkreise 3 mit unterschiedlichen Radien beginnend von 12 m bis 50 m enthält. Vom Mittelpunkt 1 ausgehend sind Strahlen 4 aufgetragen, die die Halbkreise 3 durchsetzen. An jeden Halbkreis 3 schließt sich eine Einfahrtsgerade 5 und eine Ausfahrtsgerade 6 an der anderen Seite des Halbkreises an. Auch dieser Bereich ist durch parallele, im gleichen Abstand angeordnete Meßlinien 7 unterteilt. Die Kreisbogen 8, 9 bei 40 und 50 m bilden nur einen Viertelkreis und münden in zwei ebenfalls bemaßte tangentiale Geraden 10, 11. Dieses Meßliniennetz 1 wird auf einer freien, befahrbaren Fläche bleibend aufgebracht, so daß es von beliebigen Fahrzeugen auch in zeitlichem Abstand immer wieder überfahren werden kann und zu Meßzwecken benutzbar ist.

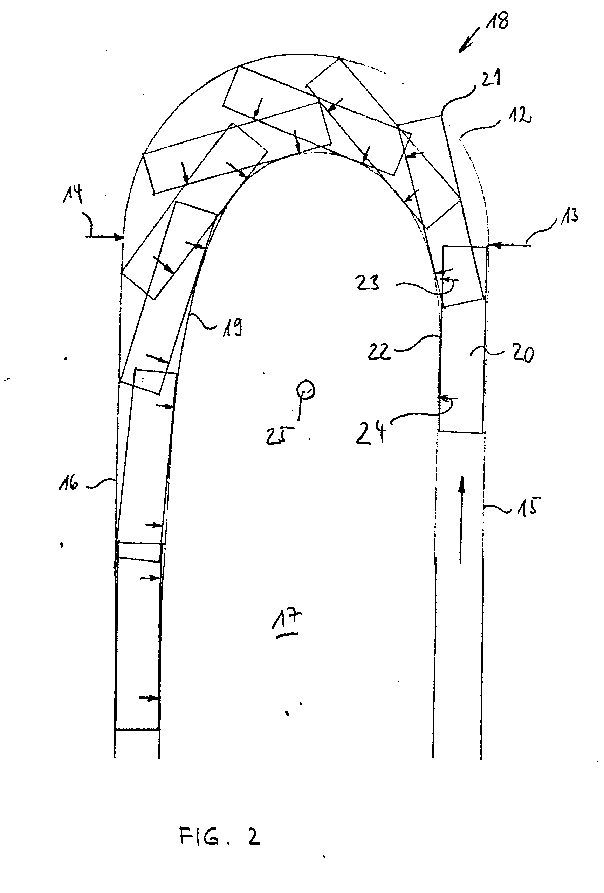

In Fig. 2 soll beispielsweise ein Halbkreisbogen 12 zwischen Pfeilen 13 und 14 dem Halbkreis 3 im Abstand von 12 m vom Mittelpunkt 2 (in einem anderen Maßstab) entsprechen. Gerade 15 und 16 entsprechen dann der Einfahrtsgeraden 5 und Ausfahrtsgeraden 6 am Halbkreis 3 im Abstand von 12 m vom Mittelpunkt 2.

Zum Ermitteln einer Hüllkurve 17, bestehend aus dem Außenteil 18, das sich aus dem Halbkreisbogen 12 und den Geraden 15 und 16 zusammensetzt, und aus der inneren Schleppkurve 19, einer Projektionsfläche, die von einem lenkbaren Fahrzeug beim Durchfahren einer Kurve überstrichen wird, wird folgendermaßen verfahren: Das zu vermessende Fahrzeug 20 (in Fig. 2 schematisch als Rechteck dargestellt) wird, vom Pfeil 13 ausgehend, mit seiner vorderen, rechten Ecke entlang dem Halbkreisbogen 12 und der Geraden 16 gesteuert, d. h. das Fahrzeug 20 wird auf einer der Kurvenlinien im Meßliniennetz 1 hier im Abstand von 12 m vom Mittelpunkt 2, geführt, so daß diese Linien bei jeder Fahrt den Außenteil 18 der Hüllkurve 17 bilden. In Fig. 2 ist das Fahrzeug 20 in verschiedenen Stellungen dargestellt, woraus zu ersehen ist, wie die Ecke 21 entlang des Außenteils 18 der Hüllkurve 17 geführt wird.

Die innere Schleppkurve 19 wird dadurch bestimmt, daß an der zur Kurveninnenseite gewandten Innenseite 22 des Fahrzeugs 20 Reflektoren 23, 24 (an der Stelle der eingezeichneten Pfeile) angebracht werden, deren örtliche Lage im Verlauf der Fahrzeugbewegung mit einem Theodoliten 25 ausgemessen werden. Der Theodolit 25 muß dabei so aufgestellt sein, daß es möglich ist, das Fahrzeug bei allen Stellungen auf der vorgegebenen Kurvenbahn anzumessen. Die Messung wird so durchgeführt, daß zu Beginn der Messung das Fahrzeug 20 entlang der Geraden 15 mit seiner Ecke 21 am Pfeil 13 aufgestellt wird und die Stellung der Reflektoren 23 und 24 gemessen und registriert wird. Anschließend wird das Fahrzeug 20 auf dem Halbkreisbogen 12, in der vorbeschriebenen Art um ein bestimmtes Stück weiterbewegt, angehalten und die Stellung der Reflektoren 23 und 24 wieder gemessen und registriert. In der Art wird so lange verfahren, bis das Fahrzeug 20 den Kreisbogen 12 durchfahren hat und so weit bewegt wurde, bis es mit seiner Außenseite parallel zu der Geraden 16 steht. Für Gelenkbusse sind wenigstens drei Reflektoren erforderlich. Für die Messungen wird bevorzugt ein Theodolit in der Art eines registrierenden Computertachymeters verwendet, dessen Meßdaten bereits während der Messung einem Meßdatenspeicher zugeführt werden können.

Die erhaltenen Meßdaten (Horizontal-,Vertikalwinkel und Strecke) werden anschließend in rechtwinklige Koordinaten umgesetzt und diese in einem geeigneten Maßstab zeichnerisch aufgetragen. Bei Verwendung eines Meßwertspeichers kann dies vorteilhaft mit einer Rechenanlage durchgeführt werden, der eine Zeichenanlage angeschlossen sein kann, mit deren Hilfe die Meßdaten in jedem beliebigen Maßstab aufgetragen werden können. Wenn diese Meßpunkte aufgetragen sind, werden in der entsprechenden Stellung und im gleichen Maßstab die Außenabmessungen des Fahrzeugs aufgezeichnet. Es ergibt sich dann eine Anordnung der Busumrisse in ihrer senkrechten Projektion, wie in Fig. 2 schematisch gezeichnet. Bei dieser Anordnung kann nochmals überprüft werden, ob die Ecke 21 des Fahrzeugs 20 exakt auf dem Kreisbogen 12 und der Geraden 16 geführt wurde. Wie aus Fig. 2 zu ersehen ist, bilden die Innenseiten 22 eine sich überschneidende Kurvenschar bzw. bei geraden Flächen des Fahrzeugs eine Geradenschar, an die, bei geringen Abständen und genügend vielen Messungen, einfach die innere Schleppkurve 19 als Hüllkurve angepaßt werden kann. Der Anbringungsort der Reflektoren 23,

24 am Fahrzeug 20 ist somit für den Erhalt der Schleppkurve 19 nicht maßgeblich und kann weitgehend willkürlich
erfolgen, da die Schleppkurve 19 den tatsächlichen Stellungen des Fahrzeugs 20 entsprechend angepaßt und ermittelt wird. Für die Genauigkeit der Schleppkurve 19 ist
es somit hier auch unerheblich, daß der am weitesten zur
Kurveninnenseite zeigende Punkt am Fahrzeug 20 entlang
dessen Innenseite im Verlauf der Kurvendurchfahrt wandert.

Bei der Verwendung einer Rechenanlage und einer automatischen Zeichenanlage können die Abmessungen des Fahrzeugs
20 miteingegeben werden, so daß hier eine automatische
Aufzeichnung der jeweiligen Fahrzeugstellung erfolgt, wobei auch die Schleppkurve 19 vom Rechner ermittelt werden
kann.

Aus der Fig. 2 ist zu ersehen, daß sich die überstrichene
Fläche bei der Einfahrt in die Kurve verbreitert (Einfahrtstrompete). Ein konzentrischer Kreis als Begrenzung
des Innenbogens ergibt sich erst, wenn ein bestimmter
Radius für den Außenbogen und ein bestimmter Winkel überschritten ist. Bei der Ausfahrt aus der Kurve verringert
sich die Breite der überstrichenen Fläche nur sehr allmählich (Ausfahrtstrompete).

Das vorbeschriebene Verfahren kann auch für alle nicht
kreisbogenförmigen Außenbogen oder für nichthalbkreisförmige Bögen verwendet werden.

Das vorbeschriebene Meß-,Rechen- und Zeichenverfahren
kann für beliebige Kurvenradien verwendet werden, wobei
sich eine Wahl der Radien von 10, 11, 12, 13, 14, 15, 20,
25, 30, 40 und 50 m als zweckmäßig erwiesen hat. Die hierbei gewonnenen Zeichenunterlagen von Hüllkurven werden in
einer Normalie dargestellt. Entsprechende Messungen sind
für alle sich in ihrer Bauart unterscheidenden Fahrzeuge
erforderlich.

Da die Planung von Baulichkeiten und Verkehrsanlagen in der Regel im Maßstab 1:50, 1:100, 1:200, 1:250 und 1:500 erfolgt, werden zweckmäßigerweise diese Maßstäbe bei der Darstellung von Hüllkurven verwendet.

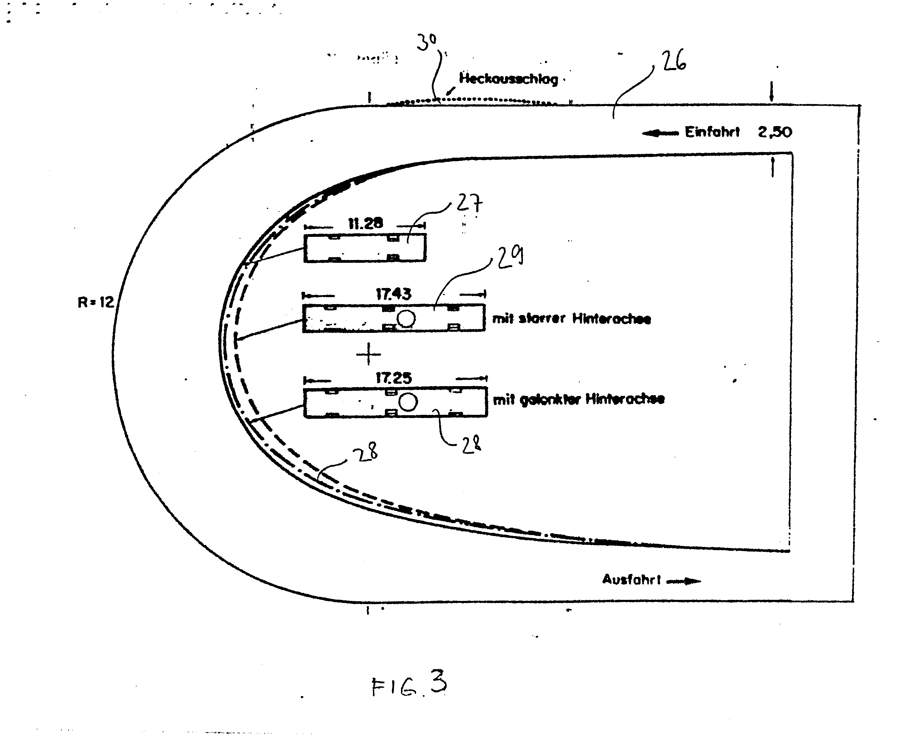

In Fig. 3 ist eine mit Hilfe des vorbeschriebenen Verfahrens gewonnene Schablone 26 dargestellt (durchgezogene Linie). Diese Schablone bezieht sich auf einen Kurven-Außenradius von 12 m und auf einen mit 27 bezeichneten, zweiachsigen Bus von 11,28 m Länge. Eine Schablone mit einer inneren Schleppkurve entsprechend der strichpunktierten Linie 28 würde sich bei einem Gelenkbus 28 mit gelenkter Hinterachse und 17,25 m Länge ergeben und entsprechend der strichlierten Linie mit einem Gelenkbus 29 von 17,43 m Länge mit starrer Hinterachse. Bei einer Schablone für die Hüllkurve für den Gelenkbus 28 tritt zusätzlich ein Heckausschlag 30 (punktierte Linie) schon an der Einfahrtsgeraden auf. Dieser Heckausschlag braucht jedoch nicht gesondert ausgemessen zu werden, da er entsprechend dem vorbeschriebenen Verfahren bei der Ermittlung der Hüllkurven gesehen wird.

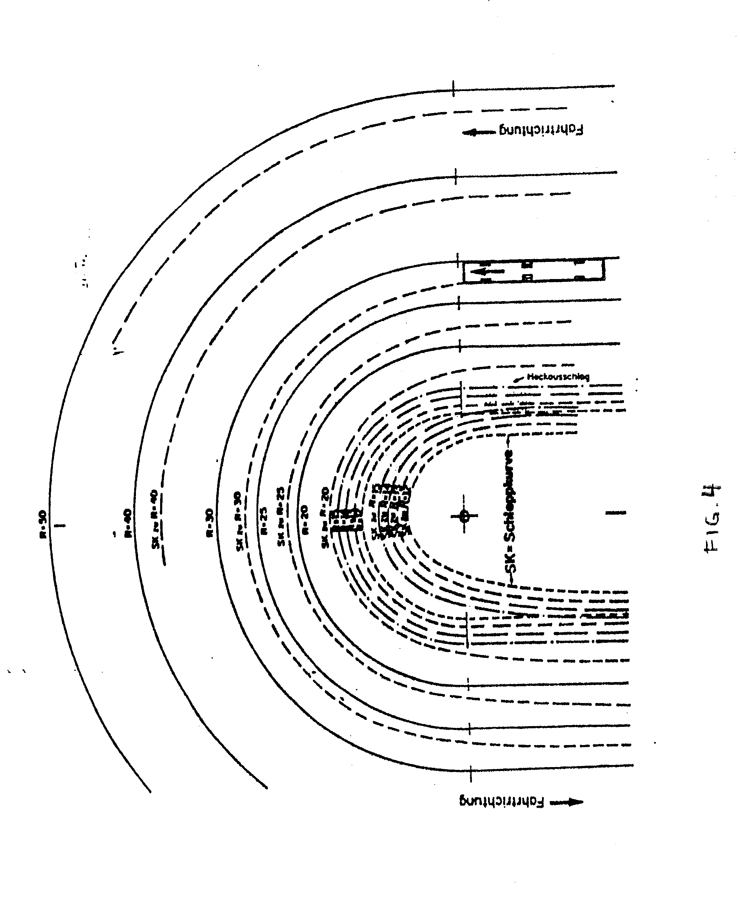

Die in Fig. 3 dargestellte Schablone bzw. Kurvenlineal ist so gefertigt, daß ihre Außenbegrenzungen die Hüllkurve wiedergeben. Auf der Schablone könnten jedoch auch mehrere Hüllkurven, beispielsweise ein und desselben Fahrzeuges für unterschiedliche Kurvenradien, gezeichnet sein. Zweckmäßig ist eine aus durchsichtigem Material gefertigte Schablone, die über Planungsunterlagen, beispielsweise Straßenpläne, gleichen Maßstabs gelegt werden kann. Es ergibt sich dann eine Anordnung von Kurven auf der Schablone entsprechend der in Fig. 4 gezeigten. Hier sind die Außenseiten der Hüllkurven mit durchgehenden Linien gezeichnet und mit dem Radiuswert in m bezeichnet. Die jeweils zugehörigen Schleppkurven sind strichliert gezeichnet und entsprechend bezeichnet.

Da die Einfahrts- und Ausfahrtstrompete bei den Hüllkurven unterschiedlich sind, ist es zweckmäßig, die Fahrtrichtung des Fahrzeugs auf der Schablone durch einen Pfeil zu markieren. Falls die gleiche Schablone, die beispielsweise für eine Linkskurve aufgenommen wurde, für eine Rechtskurve verwendet werden soll, ist diese spiegelbildlich zu verwenden bzw. bei durchsichtigen Schablonen umzudrehen. Weiter sind auf der Schablone der Fahrzeugtyp, für den diese Schablone aufgenommen wurde, und der Maßstab vermerkt.

Die beschriebenen Zeichenschablonen sind anwendbar bei allen Neu- und Umbauten von Verkehrsanlagen und Verkehrsflächen. Es läßt sich mit ihnen einfach und schnell prüfen, ob vorhandene Anlagen oder in Planung befindliche Anlagen, wenn sie maßstäblich genau dargestellt sind, von den den Schablonen zugeordneten Fahrzeugtypen befahren werden können.

Als Anwender der Schablonen kommen in erster Linie Verkehrsplanungsämter, Straßenbauämter, Straßenverkehrs-ämter, Verkehrsbehörden, Verkehrsbetriebe, Ingenieurbüros, Planungsbüros und Vermessungsbüros in Frage. Das beschriebene Verfahren sowie die daraus ableitbaren Schablonen sind auch für die Hersteller von Kraftfahrzeugen von Interesse, deren Fahrzeuge sich an der Grenze der in § 32 der Straßenverkehrszulassungsordnung aufgeführten Werte bewegen. Hier wird ein genaues Verfahren angegeben, mit dem festgestellt werden kann, ob die vorgeschriebenen Grenzwerte eingehalten sind oder ob bei einer Überschrei-tung dieser Grenzwerte Ausnahmegenehmigungen benötigt werden. Ausnahmegenehmigungen kommen hauptsächlich bei Feuerwehrfahrzeugen, Sattelschleppern, Tanklastzügen, Flughafenfahrzeugen, Fahrzeuge für Schwertransporte, Fahrzeuge mit Überbreiten und Überlängen und Gelenk- und Gliederfahrzeugen in Frage.

Die beschriebenen Normalien und Schablonen beziehen sich nur auf die vom jeweiligen Fahrzeug überstrichene Fläche. Bei der Anwendung der Schablonen muß jedoch darauf geachtet werden, daß Zuschläge für das Lenkspiel und für Fahrungenauigkeiten berücksichtigt werden. Diese Zuschläge sollten in der Regel einen Meter betragen, mindestens jedoch 0,5 m. Ist z. B. für die Begrenzung des Außenbogens eines Fahrwegs ein 15 m Radius vorgesehen und der Zuschlag für Lenkspiel und Fahrungenauigkeit soll 1 m betragen und außen liegen, so ergibt sich die Anwendung zum Finden der inneren Begrenzung der Hüllkurve wie folgt: Zu den vorgegebenen Einfahrtstangenten für das Fahrzeug in die Kurve werden im Abstand von 1 m Parallelen auf der Seite des Fahrweges gezogen. Anschließend wird der gerade Teil der Schablone mit der Einfahrtstrompete an die Einfahrtstangente angelegt und so weit verschoben, bis die äußere Begrenzung der Schablone die Ausfahrtstangente berührt. In dieser Lage wird die Innenkurve der Hüllkurve ausgezogen. Anschließend wird die Schablone so verändert, daß die gerade Seite der Ausfahrtstrompete an der um 1 m parallel in Richtung Fahrfläche verschobenen Ausfahrtstangente anliegt. Auf dieser Tangente wird die Schablone nun so weit verschoben, bis sich die innere Hüllkurve mit der Ausfahrtstrompete deckt.

Wie die vorstehende Beschreibung veranschaulicht, zeichnet sich das erfindungsgemäße Verfahren zur Ermittlung von Hüllkurven durch seine Genauigkeit, einfache Verwertung der Meßergebnisse und durch die Möglichkeit zur Herstellung von Schablonen zur Verwendung bei der Verkehrsplanung aus. Die Meßmethode ist bei Verwendung entsprechender Geräte weitgehend automatisierbar, wobei die Meßergebnisse gespeichert bleiben können und später, z. B.

für Aufzeichnungen in anderen Maßstäben, abrufbar sind. Das geschilderte Verfahren ist zudem schnell und unabhängig von der Witterung und von der Tageszeit. Mit Hilfe der gezeigten Meßmethode läßt sich die Hüllkurve zentimetergenau erfassen und kann in jedem beliebigen Maßstab dargestellt und ausgewertet werden. Durch den Vergleich von Hüllkurven, die verschiedene Fahrzeuge, insbesondere Busse, betreffen, werden diese Fahrzeuge, wenn sie auf gleichen Außenkurven geführt werden, miteinander in Bezug auf ihre benötigte Fläche bei Kurvenfahrten vergleichbar. Für ähnlich gebaute Fahrzeugtypen ist es zudem möglich, eine Normalie oder Schablone für alle untersuchten Fahrzeuge dieser Typen herzustellen.

Mit der aus dem beschriebenen Verfahren gewonnenen Schablone wird ein zuverlässiges und einfach anwendbares Zeichenhilfsmittel zur Verfügung gestellt, das bisher bekannte aufwendige Verfahren im Planungsstadium entbehrlich macht und im Entwurfsstadium gestattet, auf Berechnungen und umfangreiche Konstruktionen zu verzichten.

Im Ergebnis wurden folgende allgemeine Erkenntnisse gewonnen:
Einfahrtstrompete und Ausfahrtstrompete enthalten an ihrer Innenseite stets klothoidenähnliche Hüllkurvenabschnitte.

Jedes Fahrzeug mit gelenkter Vorderachse überstreicht bei der Fahrt von der Geraden in den Kreis bei einem überstehenden Heck mit diesem die Einfahrtstangente. Dieser Ausschlag ist bei zweiachsigen Bustypen und Kreisradien über 25 m vernachlässigbar, da er sich innerhalb der Zeichengenauigkeit bei der Erstellung der maßstäblich verkleinerten Zeichnungen bewegt.

Fahrzeuge mit gelenkter Hinterachse haben bei der Fahrt in einen Kreisbogen im Bereich der Einfahrtstangente einen Heckausschlag, der die Einfahrtstangente überstreicht.

Bei Kraftfahrzeugen mit starrer Hinterachse befindet sich der größte Ausschlag der Innenkurve in Höhe der letzten Achse.

Bei Fahrzeugen mit gelenkter Hinterachse befindet sich der Punkt des größten Ausschlags zur Bestimmung der inneren Hüllkurve nur dann an einem bestimmten Punkt, wenn sich ein konzentrischer Kreis zum Außenbogen abbildet. Im Bereich der Einfahrts- und Ausfahrtstrompeten wandert der Punkt des größten Ausschlags auf der Innenseite der Fahrzeugbegrenzung.

Reinhold Hammer
Hans-Jürgen Wohlleben

P a t e n t a n s p r ü c h e

1. Verfahren zum Ermitteln einer Hüllkurve einer Projektionsfläche, die von einem lenkbaren Fahrzeug beim Durchfahren einer Kurve bei senkrechter Projektion seiner Außenabmessungen auf die Fahrbahn überstrichen wird, wobei die Kurve zwischen zwei Geraden liegt und einen bestimmten Außenradius aufweist, dadurch gekennzeichnet, daß das Fahrzeug (20) mit dem den weitesten Ausschlag ergebenden Teil (21) seiner Außenabmessung den Außenradius der Kurve entlang gesteuert wird, daß an der Seite des Fahrzeugs, die zur Innenseite der Kurve weist (Innenseite 22), im seitlichen Abstand wenigstens zwei Meßpunkte (23, 24) angebracht sind, daß die Meßpunkte (23,24) bei verschiedenen Stellungen entlang des Fahrzeugswegs mit einem Tachymeter-Theodoliten (25) geometrisch vermessen werden, daß der Außenteil (18) der Hüllkurve (17) in einem bestimmten Maßstab gezeichnet wird, daß die Meßdaten des Theodoliten (25) ausgewertet werden und die vermessenen Stellungen der Meßpunkte (23, 24) im gleichen Maßstab, dem Außenteil der Hüllkurve (17) zugeordnet, aufgezeichnet werden, daß jeweils die Projektion wenigstens der Innenseite (22) des Fahrzeugs (20), entsprechend der zugeordneten Stellung der Meßpunkte (23, 24), aufgezeichnet wird, daß der Innenteil der Hüllkurve (17) durch Verbindung der am weitesten zur Kurveninnenseite weisenden Punkte der Projektion der Innenseite (22) des Fahrzeugs (20) erhalten und gezeichnet wird.

2. Verfahren nach Anspruch 1, daruch gekennzeichnet, daß der Bogen ein Kreisbogen (3; 12) mit bestimmten Radius ist.

3. Verfahren nach Anspruch 1 oder 2, dadurch gekennzeichnet, daß das Fahrzeug bei lenkbarer Vorderachse mit einer vorderen, zur Kurvenaußenseite weisenden Stoßstangenachse (21) und bei lenkbarer Hinterachse mit einer seitlichen hinteren, zur Kurvenaußenseite hin weisenden Stoßstangenecke (21) entlang dem Bogen (3;12) gesteuert wird.

4. Verfahren nach Anspruch 1 bis 3, dadurch gekennzeichnet, daß die Meßpunkte Reflektoren (23, 24) sind, deren Stellung optisch vermessen wird.

5. Verfahren nach Anspruch 1 bis 4, dadurch gekennzeichnet, daß die Meßpunkte (23, 24) bei Stellungen des Fahrzeugs in gleichen, vorbestimmten Abständen bzw. Winkelabständen vermessen werden.

6. Verfahren nach Anspruch 1 bis 5, dadurch gekennzeichnet, daß die Projektion der Innenseite (22) des Fahrzeugs (2o) eine gerade Strecke ist und der Innenteil der Hüllkurve (Schleppkurve 19) durch die Hüllkurve an die Strecken gebildet wird.

7. Verfahren nach Anspruch 1 bis 6, dadurch gekennzeichnet, daß die Koordinatendaten für die Geraden (15, 16) und den Bogen (12), die Meßdaten des Theodoliten (25) und die Daten, die die Projektion der Außenabmessungen des Fahrzeugs wiedergeben, einem Rechner eingegeben werden, der die Auswertung vornimmt und in Verbindung mit einer Zeicheneinheit die Hüllkurve (17) zeichnet.

8. Verfahren nach Anspruch 1 bis 6, dadurch gekennzeichnet, daß bei engen Kurven und/oder großem Überhang am Fahrzeug (2o) ein Heckausschlag (3o) des Fahrzeugs zur Kurvenaußenseite hin ermittelt und aufgezeichnet wird.

9. Schablone, die im verkleinerten Maßstab wenigstens eine Hüllkurve einer Projektionsfläche wiedergibt, die von wenigstens einem Fahrzeug beim Druchfahren wenigstens einer Kurve bei senkrechter Projektion seiner Außenabmessungen auf die Fahrbahn überstrichen wird, wobei die Kurve zwischen zwei Geraden liegt und einen bestimmten Außenradius aufweist, gekennzeichnet dadurch, daß die Schablone (26) herstellbar ist in der Weise, daß das Fahrzeug (20) mit dem den weitesten Ausschlag ergebenden Teil (21) seiner Außenabmessung den Außenradius der Kurve entlanggesteuert wird, daß an der Seite des Fahrzeugs, die zur Innenseite der Kurve weist (Innenseite 22), im seitlichen Abstand wenigstens zwei Meßpunkte (23,24) angebracht sind, daß die Meßpunkte (23,24) bei verschiedenen Stellungen entlang des Fahrzeugswegs mit einem Tachymeter-Theodoliten (25) geometrisch vermessen werden, daß der Außenteil (18) der Hüllkurve (17) in einem bestimmten Maßstab gezeichnet wird, daß die Meßdaten des Theodoliten (25) ausgewertet werden und die vermessenen Stellungen der Meßpunkte (23,24) im gleichen Maßstab, dem Außenteil der Hüllkurve (17) zugeordnet, aufgezeichnet werden, daß jeweils die Projektion wenigstens der Innenseite (22) des Fahrzeugs (20), entsprechend der zugeordneten Stellung der Meßpunkte (23,24), aufgezeichnet wird, daß der Innenteil der Hüllkurve (17) durch Verbindung der am weitesten zur Kurveninnenseite weisenden Punkte der Projektion der Innenseite (22) des Fahrzeugs (20) erhalten und gezeichnet wird, und daß die Hüllkurve (17) entweder direkt auf die Schablone (26) gezeichnet wird oder auf diese von einer Zeichnung übertragen wird.

1o. Schablone nach Anspruch 9, dadurch gekennzeichnet, daß wenigstens eine Hüllkurve (17) die Begrenzung der Schablone (26) bildet.

11. Schablone nach Anspruch 9 oder 1o, dadurch gekennzeichnet, daß die Schablone (26) aus durchsichtigem Material hergestellt ist.

12. Schablone nach Anspruch 9 bis 11, dadurch gekennzeichnet, daß auf einer Schablone mehrere Hüllkurven (17) eines Fahrzeugs dargestellt sind, die mehreren gefahrenen Kurven entsprechen.

13. Schablone nach Anspruch 9 bis 12, dadurch gekennzeichnet, daß auf der Schablone (26) der Übergang der Geraden (15, 16) in den Bogen (12) am Außenteil jeder Hüllkurve (17) bezeichnet ist und die Fahrtrichtung markiert ist.

FIG. 1

FIG. 2

Heckausschlag 30 26

← Einfahrt 2,50

R=12

11.28 — 27

17.43 — 29 mit starrer Hinterachse

+

17.25 mit gelenkter Hinterachse

28 28

Ausfahrt →

FIG.3

3/4

0095025

FIG. 4

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| A | Patent Abstracts of Japan, vol. 5, no. 122, 7 August 1981 & JP-A-56-63206 | 1,2,7 | G 01 C    7/04 <br> G 01 B   11/02 <br> B 43 L   13/20 |
| | --- | | |
| P,A | EP-A-0 053 102  (A. GNEHM, WERKZEUG- UND APPARATEFABRIK) <br> * Seite 5, Zeilen 18-28 * | 1,2,10 -12 | |
| | --- | | |
| P,A | GB-A-2 085 165  (A. COUTURIER) <br> * Anspruch 1 * | 4,5,11 | |
| | ----- | | |

RECHERCHIERTE SACHGEBIETE (Int. Cl. 3)

B 43 L   13/00
G 01 B   11/00
G 01 B   21/00
G 01 C    7/00
G 09 B   23/00
G 09 B   25/00

Der vorliegende Recherchenbericht wurde für alle Patentansprüche erstellt.

| Recherchenort <br> BERLIN | Abschlußdatum der Recherche <br> 21-06-1983 | Prüfer <br> BOTTERILL K.J. |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03.82